# EUROPÄISCHE PATENTSCHRIFT

(11) **EP 0 965 036 B1**
(45) Veröffentlichungstag und Bekanntmachung des Hinweises auf die Patenterteilung: **13.06.2001**
(21) Anmeldenummer: 98913674.2
(22) Anmeldetag: 06.03.1998
(51) Int. Cl.: G01N 21/88

(54) **STANDARD ZUR KALIBRIERUNG UND ÜBERPRÜFUNG EINES OBERFLÄCHENINSPEKTIONS-GERÄTES UND VERFAHREN ZUR HERSTELLUNG DES STANDARDS**
STANDARD FOR CALIBRATING AND CHECKING A SURFACE INSPECTION DEVICE AND METHOD FOR THE PRODUCTION THEREOF
GABARIT DE CALIBRAGE ET DE CONTROLE D'UN INSTRUMENT D'INSPECTION DE SURFACE ET PROCEDE DE PRODUCTION DUDIT GABARIT

(30) Priorität: 06.03.1997 DE 19709255
(43) Veröffentlichungstag der Anmeldung: 22.12.1999
(73) Patentinhaber: Wacker Siltronic Gesellschaft für Halbleitermaterialien Aktiengesellschaft, 84489 Burghausen (DE)
(72) Erfinder: SCHMOLKE, Rüdiger, D-84489 Burghausen (DE); GERBER, Hans-Adolf, D-84489 Burghausen (DE); GRÄF, Dieter, D-84489 Burghausen (DE); KERSCHREITER, Robert, D-84375 Kirchdorf (DE); LUGER, Anton, D-84357 Simbach (DE); SUHREN, Monique, Portland, OR 97210 (US)
(74) Vertreter: Rimböck, Karl-Heinz, Dr.
(86) Internationale Anmeldenummer: EP9801313
(87) Internationale Veröffentlichungsnummer: WO9839638

(56) Entgegenhaltungen:
- EP-A- 0 180 756
- WO-A-92/07248
- US-A- 5 383 018
- US-A- 5 599 464
- PATENT ABSTRACTS OF JAPAN vol. 018, no. 399 (P-1776), 26.Juli 1994 & JP 06 117845 A (ADVANTEST CORP), 28.April 1994,

## Beschreibung

Gegenstand der Erfindung ist ein reproduzierbarer Standard zur Kalibrierung und Überprüfung des Hellfeldkanals eines Oberflächeninspektions-Gerätes, das für Untersuchungen einer glatten Oberfläche einer Probe eingesetzt wird. Gegenstand der Erfindung ist auch ein Verfahren zur Herstellung des Standards. Glatte Oberflächen einer Probe, beispielsweise die Seiten von Halbleiterscheiben, werden üblicherweise mit Oberflächeninspektions-Geräten untersucht, wobei die zu untersuchende Oberfläche mit einem Laserstrahl automatisch abgetastet wird. Defekte auf der Oberfläche der Probe, insbesondere Materialerhöhungen und -Vertiefungen, aber auch Fremdpartikel, können erkannt und quantifiziert werden, indem das von der Oberfläche der Probe abgestrahlte Licht detektiert und ausgewertet wird. Für Messungen im Dunkelfeldkanal des Oberflächeninspektions-Gerätes, das heißt, für Messungen des beim Auftreffen des Laserstrahls außerspekular erzeugten Streulichts, sind international anerkannte Standards verfügbar, mit denen der Dunkelfeldkanal des Oberflächeninspektions-Gerätes kalibriert und überprüft werden kann. Ein solcher Standard besteht beispielsweise aus einer polierten Halbleiterscheibe, auf deren einen Seite eine bestimmte Zahl von Mikrokugeln mit bestimmter mittlerer Größe und Größenverteilung deponiert sind.

Die Mikrokugeln stellen nur eine grobe Näherung an die tatsächlich auf glatten Oberflächen anzutreffenden Defekte dar. Darüber hinaus können insbesondere Defekte, die auf einer vergleichsweise großen lateralen Strecke nur kleine Höhenunterschiede überbrücken, nicht im Dunkelfeldkanal detektiert werden. Sie lassen sich aber im Hellfeldkanal des Oberflächeninspektions-Gerätes, das heißt, durch Messung des von der Oberfläche der Probe spekular reflektierten Laserlichts nachweisen. Der Nachweis erfolgt üblicherweise durch Messung von Intensitätsverlusten des in der spekularen Richtung reflektierten Laserstrahls oder durch Messung des differentiellen Interferenzkontrastes ("Normaskikontrastes"). Allerdings gibt es derzeit keinen zuverlässigen Standard, mit dem der Hellfeldkanal des Oberflächeninspektions-Gerätes überprüft und kalibriert werden kann. Standards, die auf mit Mikrokugeln belegten Substraten basieren, erweisen sich für Untersuchungen im Hellfeldkanal als unzureichend. Ein derartiger Hellfeld-Standard muß mit vergleichsweise großen Mikrokugeln belegt sein. Da die Haftung von Mikrokugeln auf einem Substrat mit Zunahme des Kugeldurchmessers sinkt, ist die Handhabung des Standards schwierig. Darüber hinaus ist ein solcher Standard nicht reinigbar. Es hat sich auch als unzweckmäßig erwiesen, bekannte Stufenhöhenstandards als Standards für Messungen im Hellfeldkanal einzusetzen. Bei Verwendung solcher Standards lassen sich nämlich keine Aussagen über Flankensteigungen von Defekten treffen, so daß eine realitätsnahe Defektcharakterisierung nicht möglich ist.

Die US-5,599,464 und die WO-92/07248 offenbaren Dunkelfeldstandards zum Kalibrieren optischer Meßinstrumente. In der US-5,383,018 ist eine Kalibrierscheibe für Scanner von Halbleiterscheiben beschrieben.

Die vorliegende Erfindung löst die Aufgabe, einen Standard bereitzustellen, der zur Kalibrierung und Überprüfung des Hellfeldkanals eines Oberflächeninspektions-Gerätes besser geeignet ist.

Gegenstand der Erfindung ist ein reproduzierbarer Standard zur Kalibrierung und Überprüfung des Hellfeldkanals eines Oberflächeninspektions-Gerätes, das für Untersuchungen einer glatten Oberfläche einer Probe eingesetzt wird, und ein Verfahren zur Herstellung des Standards, wobei eine Mikrostruktur auf einer Oberfläche eines als Standard vorgesehenen Substrates erzeugt wird, das dadurch gekennzeichnet ist, daß die Mikrostruktur einer glättenden Behandlung unterzogen wird, um die Konturen der Mikrostruktur den auf der Probe zu findenden Defehten nach zu empfinden.

Der Standard zeichnet sich insbesondere dadurch aus, daß im Hellfeldkanal detektierbare Defekte, die auf der glatten Oberfläche einer Probe angetroffen werden, durch auf dem Standard aufgebrachte Mikrostrukturen realitätsnah nachgebildet sind. Der Standard kann daher auch vorteilhaft zu Zwecken der statistischen Prozeßkontrolle (SPC) eingesetzt werden. Des weiteren kann der Standard mit hoher Genauigkeit reproduziert werden. Das beim Vermessen des Standards detektierbare Hellfeldkanal-Signal läßt sich direkt auf eine bestimmte Defektgeometrie zurückführen. Der Standard kann darüber hinaus problemlos gereinigt werden. Schließlich lassen sich mit Hilfe des Standards auch mögliche Sensitivitätsunterschiede des Hellfeldkanals in Bezug auf eine zu prüfende Oberfläche feststellen.

Zur Herstellung des Standards wird ein Substrat benötigt, das mindestens eine ebene Oberfläche aufweist, auf der eine Mikrostruktur ausgebildet werden kann. Bevorzugte Substrate sind Halbleiterscheiben, insbesondere einkristalline Halbleiterscheiben aus Silicium, die mindestens eine vorpolierte oder spiegelpolierte Seite aufweisen. Diese Halbleiterscheiben können auch beschichtet sein, beispielsweise mit einer Oxidschicht, einer Nitridschicht oder mit einer Epitaxieschicht. In einem ersten Verfahrensschritt wird die ebene Oberfläche des Substrates oder ein Teil dieser Oberfläche strukturiert. Es werden Mikrostrukturen mit an sich bekannten Methoden auf der Oberfläche erzeugt. Besonders bevorzugte Methoden sind lithographische Methoden, beispielsweise die Photo-, Ionenstrahl- ("Focussed Ion Beam") und die Elektronenstrahl-Lithographie, sowie Strukturierungs-Methoden mittels Ätzen ("micromachining") und Plasmaätzen. Selbstverständlich können auch Kombinationen der genannte Methoden zur Strukturierung der Oberfläche des Substrates eingesetzt werden.

Bevorzugte Mikrostrukturen sind Raster sich regelmäßig wiederholender geometrischer Objekte, wobei die Ausdehnung eines Objektes vorzugsweise 1 µm bis 400 µm in der Breite und Länge und 1 nm bis 1µm in der Höhe ist. Die Objekte können als Erhebungen oder Vertiefungen ausgebildet sein, die aus der Substratebene herausragen beziehungsweise in das Substrat hineinragen. Beispiele für solche Objekte sind säulenförmige Erhebungen oder Vertiefungen. Die Objekte bilden, im Gegensatz zu auf der Substratoberfläche abgelegten Mikrokugeln, ein Einheit mit dem Substrat.

Prinzipiell können mit derartig strukturierten Substraten bereits Signale im Hellfeldkanal eines Oberflächeninspektions-Gerätes aufgenommen werden. Die Geometrie der Objekte unterscheidet sich jedoch noch wesentlich von der Geometrie von Defekten, die auf zu untersuchenden Proben üblicherweise gefunden werden. Insbesondere haben derartige Objekte hohe Flankensteigungen. Um einen zuverlässigen Standard zur Kalibrierung und Überprüfung des Hellfeldkanals zu erhalten, wird deshalb vorgeschlagen, die strukturierte Oberfläche des Substrates einer glättenden Behandlung zu unterziehen. Durch eine solche Behandlung werden insbesondere Kanten entfernt und die Objekte so verändert, daß ihr Aussehen dem von auf der Oberfläche von Proben zu findenden Defekten nachempfunden ist.

Die glättende Behandlung erfolgt vorzugsweise durch Polieren, Plasmaätzen, Ätzen mit einer nicht präferentiellen Ätze oder durch eine Kombination der genannten Methoden.

Der Hellfeldkanal eines Oberflächeninspektions-Gerätes wird mit auf die beschriebene Weise hergestellten Standards regelmäßig kalibriert und überprüft. Im Hellfeldkanal detektierbare Defekte auf glatten Oberflächen von Proben können dann mit dem Oberflächeninspektions-Gerät in automatisch durchgeführten Reihenuntersuchungen zahlenmäßig ermittelt und einer bestimmten Defektart bezüglich Aussehen und Größe zugeordnet werden.

Proben für automatische Reihenuntersuchungen sind insbesondere Halbleiterscheiben, beispielsweise einkristalline Siliciumscheiben, beschichtete Halbleiterscheiben, optische Anzeigen ("flat panel displays") sowie elektronische und optische Speichermedien ("disks", "compact disks", "hard disks").

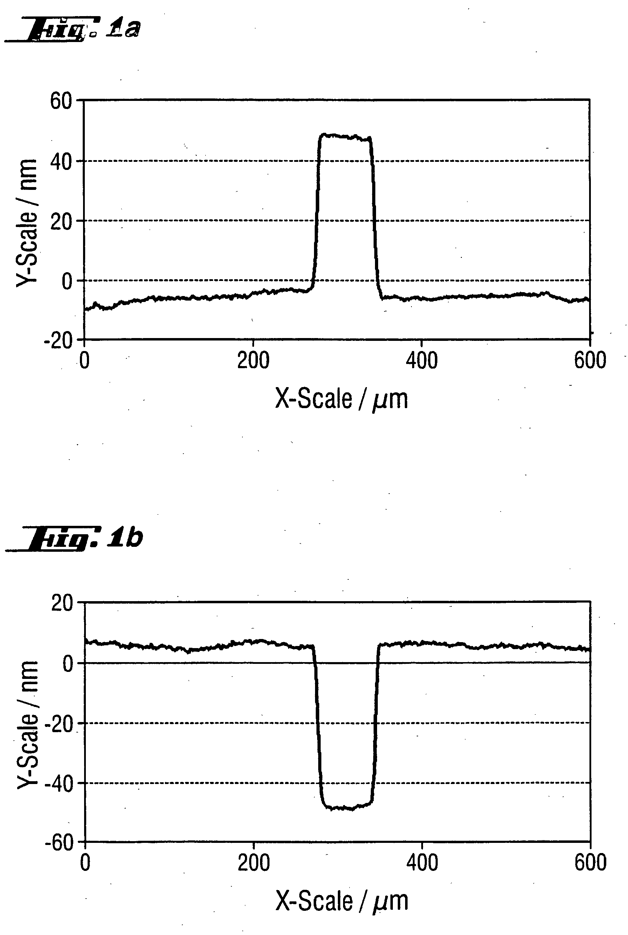

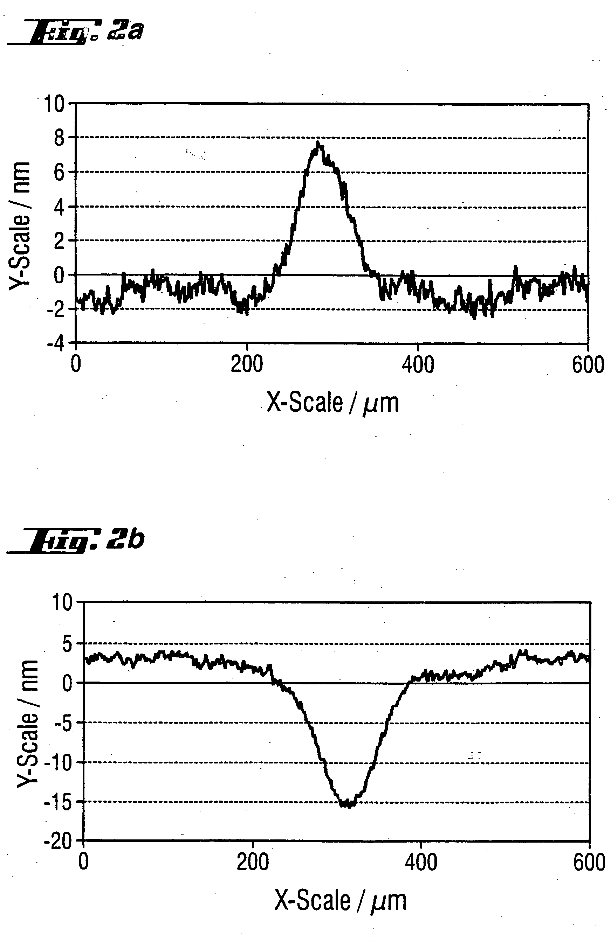

Die Erfindung wird nachfolgend an einem bevorzugten Ausführungsbeispiel und unter Einbezug von Figuren näher erläutert. Das Ausführungsbeispiel betrifft die Herstellung eines Standards, der sich insbesondere zur Kalibrierung des Hellfeldkanals von Oberflächeninspektions-Geräten eignet, die für Reihenuntersuchungen von Siliciumscheiben vorgesehen sind. Die Figuren 1a und 1b zeigen jeweils eine Abbildung eines Objektes einer auf einem Substrat erzeugten Mikrostruktur. In den Figuren 2a und 2b ist dargestellt, wie sich das Aussehen der Objekte nach einem Polierschritt verändert hat. Die Figuren zeigen lokale Querschnitte durch die Halbleiterscheibe, die bei einer Betrachtung der Objekte mit Hilfe eines Interferenzmikroskops erzeugt wurden.

Zur Herstellung des Hellfeldkanal-Standards wurden zwei polierte Halbleiterscheiben aus Silicium mit einem Durchmesser von 200 mm als Substrate ausgewählt (Scheibe a und Scheibe b). Die Oberflächen je einer Seite der Halbleiterscheiben bestand aus einer 25 nm dicken, durch eine thermische Behandlung erzeugten Oxidschicht. Diese Schicht wurde photolithographisch strukturiert. Die erzeugte Mikrostruktur umfaßte ein Raster regelmäßig angeordneter, zylinderförmiger Oxidsäulen mit einem

Durchmesser von ca. 100 µm (Scheibe a) beziehungsweise säulenförmiger Vertiefungen in der Oxidschicht (Scheibe b).

Die derartig strukturierten Substratscheiben eigneten sich prinzipiell bereits als Hellfeldkanal-Standards. Bei ihrer Untersuchung im Hellfeldkanal eines Oberflächeninspektions-Gerätes wurden Signale erhalten, deren Verteilung um einen Zentrumswert lag, wobei dieser mit der Oxidschichtdicke korrelierte. Da die erzeugten Mikrostrukturen jedoch übliche Defekte, die beispielsweise auf polierten oder epitaxierten Siliciumscheiben zu finden sind, nicht ausreichend realitätsnah nachempfinden, wurden diese in die Siliciumscheiben umkopiert und geglättet. Die Scheiben wurden mit einer 85 °C heißen, alkalisch oxidierenden Ätzlösung vom sogenannten SC1-Typ (mit einem Verhältnis NH₄OH:H₂O₂:H₂O von 1:1:5) behandelt, die in der Lage ist, das Oxid und das Silicium mit Geschwindigkeiten im Verhältnis von 1:2 abzutragen. Die Oxidschicht wurde durch die Ätzbehandlung vollständig entfernt. Durch die unterschiedlichen Abtragsraten entstanden ca. 50 nm hohe Siliciumsäulen (Scheibe a), von denen eine in Figur 1a abgebildet ist, beziehungsweise säulenförmige Vertiefungen (Scheibe b), von denen eine in Figur 1b abgebildet ist.

Die strukturierten Seiten beider Substratscheiben wurden anschließend mit einem Abtrag von 2 µm auf herkömmliche Weise poliert. Die Figuren 2a und 2b machen deutlich, daß die Konturen der Objekte durch die Politur weitgehend geglättet wurden. Die Objekte sind dadurch den auf Proben zu findenden Defekten nachempfunden, weil deren Konturen ebenfalls kaum Kanten haben. Eine Untersuchung der hergestellten Standards im Hellfeldkanal eines Oberflächeninspektions-Gerätes ergab eine enge Signalverteilung um einen Zentrumswert, der die geometrischen Dimensionen der Objekte widerspiegelte. Durch geeignete Variation des Polierprozesses, insbesondere durch Veränderung des Polierabtrages, lassen sich die vertikalen Dimensionen der Mikrostrukturen beeinflussen.

## Patentansprüche

1. Verfahren zur Herstellung eines reproduzierbaren Standards zur Kalibrierung und Überprüfung des Hellfeldkanals eines Oberflächeninspektions-Gerätes, das für Untersuchungen einer glatten Oberfläche einer Probe eingesetzt wird, wobei eine Mikrostruktur auf einer Oberfläche eines als Standard vorgesehenen Substrates erzeugt wird, dadurch gekennzeichnet, daß die Mikrostruktur einer glättenden Behandlung unterzogen wird, um die Konturen der Mikrostruktur den auf der Probe zu findenden Defehten nach zu empfinden.

2. Verfahren nach Anspruch 1, dadurch gekennzeichnet, daß die Mikrostruktur mit einer Methode erzeugt wird, die aus einer Gruppe ausgewählt ist, die lithographische Methoden, beispielsweise die Photo-, Ionenstrahl- ("Focussed Ion Beam") und die Elektronenstrahl-Lithographie, sowie Strukturierungs-Methoden mittels Ätzen ("micromachining") und Plasmaätzen, und beliebige Kombinationen der genannten Methoden umfaßt.

3. Verfahren nach Anspruch 1 oder Anspruch 2, dadurch gekennzeichnet, daß die glättende Behandlung aus einer Gruppe ausgewählt ist, die Polieren, Plasmaätzen, Ätzen mit einer nicht präferentiellen Ätze und beliebige Kombinationen der genannten Behandlungen umfaßt.

4. Verfahren nach einem der Ansprüche 1 bis 3, dadurch gekennzeichnet, daß das Substrat aus einer Gruppe ausgewählt wird, die Halbleiterscheiben, insbesondere einkristalline Halbleiterscheiben aus Silicium, die mindestens eine vorpolierte oder eine spiegelpolierte Seite aufweisen, und beschichtete Halbleiterscheiben, insbesondere mit einer Oxidschicht, einer Nitridschicht oder mit einer Epitaxieschicht beschichtete Halbleiterscheiben, umfaßt.

5. Reproduzierbarer Standard zur Kalibrierung und Überprüfung des Hellfeldkanals eines Oberflächeninspektions-Gerätes, das für Untersuchungen einer glatten Oberfläche einer Probe eingesetzt wird, hergestellt nach einem Verfahren gemäß einem der Ansprüche 1 bis 4.

## Claims

1. Method for making a reproducible standard for calibrating and checking the bright field channel of a surface inspection device which is used for examinations of a smooth surface of a specimen, a microstructure being produced on a surface of a substrate provided as a standard, characterized in that the microstructure undergoes a smoothing treatment in order to model the contours of the microstructure on the defects to be found on the specimen.

2. Method according to Claim 1, characterized in that the microstructure is produced using a method which is selected from a group comprising lithographic methods, for example photolithography, ion beam (focussed ion beam) lithography and electron beam lithography, as well as structuring methods using etching (micromachining) and plasma etching, and any combinations of the said methods.

3. Method according to Claim 1 or Claim 2, characterized in that the smoothing treatment is selected from a group comprising polishing, plasma etching, etching with a non-preferential etch and any combinations of the said treatments.

4. Method according to one of Claims 1 to 3, characterized in that the substrate is selected from a group comprising semiconductor wafers, in particular monocrystalline semiconductor wafers of silicon which have at least one prepolished or mirror-polished side, and coated semiconductor wafers, in particular semiconductor wafers coated with an oxide layer, a nitride layer or with an epitaxial layer.

5. Reproducible standard for calibrating and checking the bright field channel of a surface inspection device which is used for examinations of a smooth surface of a specimen, made using a method according to one of Claims 1 to 4.

## Revendications

1. Procédé de fabrication d'un étalon reproductible pour le calibrage et le contrôle du canal à fond clair d'un appareil d'inspection de surface, qui est utilisé pour des examens d'une surface lisse d'un échantillon, dans lequel est produite une microstructure sur une surface d'un substrat prévu comme étalon, caractérisé en ce que la microstructure est soumise à un traitement de polissage afin de réaliser les contours de la microstructure selon les défauts susceptibles d'être trouvés sur l'échantillon.

2. Procédé selon la revendication 1, caractérisé en ce que la microstructure est produite par une méthode qui est choisie dans un groupe qui comprend des méthodes lithographiques, par exemple la photolithographie, la lithographie à faisceau ionique ("Focussed ion beam") et la lithographie à faisceau électronique, ainsi que des méthodes de structuration par gravure ("micromachining") et gravure au plasma, et des combinaisons quelconques des méthodes mentionnées.

3. Procédé selon la revendication 1 ou 2, caractérisé en ce que le traitement de polissage est choisi dans un groupe qui comprend le polissage, la gravure au plasma, la gravure avec une eau-forte non préférentielle et des combinaisons quelconques des traitements mentionnés.

4. Procédé selon l'une quelconque des revendications 1 à 3, caractérisé en ce que le substrat est choisi dans un groupe qui comprend des tranches semi-conductrices, en particulier des tranches semi-conductrices monocristallines de silicium, qui présentent au moins une face pré-polie ou polie comme un miroir, et des tranches semi-conductrices revêtues, en particulier des tranches semi-conductrices revêtues d'une couche d'oxyde, d'une couche de nitrure ou d'une couche épitaxiale.

5. Étalon reproductible pour le calibrage et le contrôle du canal à fond clair d'un appareil d'inspection de surface, qui est utilisé pour des examens d'une surface lisse d'un échantillon suivant un procédé selon l'une quelconque des revendications 1 à 4.
